Europäisches Patentamt

European Patent Office

Office européen des brevets

(11) Publication number: **0 153 742**
**A1**

## (12) EUROPEAN PATENT APPLICATION

(21) Application number: **85102181.6**

(22) Date of filing: **27.02.85**

(51) Int. Cl.⁴: **B 31 B 1/26**
**B 31 B 3/00, B 31 B 21/00**

(30) Priority: **28.02.84 JP 37178/84**

(43) Date of publication of application:
**04.09.85 Bulletin 85/36**

(84) Designated Contracting States:
**DE FR GB IT**

(71) Applicant: **Shin-Etsu Polymer Co., Ltd.**
**11, Nihonbashi-Honcho 4-chome, Chuo-ku**
**Tokyo(JP)**

(72) Inventor: **Shizukuda, Yoshinari**
**(21-203) 710-50, Higashiarai**
**Ohmiya-shi Saitama-ken(JP)**

(72) Inventor: **Momose, Yoshinori**
**3043-5, Haraichi**
**Ageo-shi Saitama-ken(JP)**

(74) Representative: **Jaeger, Klaus, Dr. et al,**
**JAEGER & PARTNER Patentanwälte Bergstrasse 48 1/2**
**D-8035 München-Gauting(DE)**

(54) An apparatus for manufacturing a jacket case for disc.

(57) The invention provides a machine for manufacturing a plastic-made jacket-like case for enveloping a disc-like material such as the jacket for a floppy disc in computers with high efficiency and reliablility by folding and bending a development sheet followed by welding of the side flaps. Different from conventional process using a series of machines for each of the working steps, the inventive machine comprises in itself: (a) a sheet-stationing table (6) for mounting thereon the half portion of a generally rectangular sheet development provided with peripheral flaps; (b) a positioning means (8,11) for exactly positioning the development sheet on the table; (c) a body-flap lifter table (9) which serves to fold the second half portion of the development sheet on the first half portion; (d) a pair of side-flap bender tables (10) installed at both sides of the sheet-stationing table which serve to bend the side flaps on to the second half portion of the sheet body now folded in two; and (e) a welding means (18) above the sheet-stationing table for bonding the side flaps to the second half portion of the body sheet by welding.

FIG. 2

EP 0 153 742 A1

0153742

# AN APPARATUS FOR MANUFACTURING A JACKET CASE FOR DISC

## BACKGROUND OF THE INVENTION

The present invention relates to an apparatus or machine for manufacuring a plastic-made jacket-like case for a disc material such as a phonographic record, optical disc, floppy disc and the like recording media in computers or other information-processing instruments.

Jacket cases as mentioned above are manufactured in large quantities and a usual process for the manufacture of the same is as follows. Namely, a plastic sheet is punched to give a development of the case in a generally rectangular form provided with flaps on three sides of a half portion of the rectangle, i.e. an end flap and two side flaps, to which the other half portion folded on the first half portion is bonded by welding or other suitable means so that the two half portions folded in two are connected together to complete the jacket-like form. It is usual in the jacket cases for floppy discs that a liner is bonded to the inside surface of the body of the case and, in some cases, openings for driving shaft and the magnetic head are provided in advance. The thus prepared development sheet is mounted on the stationing table of a body sheet-folding machine on which a half portion of the rectangular development sheet provided with an end flap and two side flaps is pressed and fixed on the table with an insert presser descending thereon followed

- 2 -

0153742

by bending of the other half portion along the center line of the rectangular sheet on to the first half portion fixed on the table. The thus folded sheet having the flaps protruded out of the peripheries is then transferred together with the insert to a flap-bending machine in which exact positioning of the sheet material is followed by bending of the two side flaps on the opposite sides on to the body flap of the sheet along the side peripheries of the sheet body. The sheet thus folded in two with the side flaps bent on the upper body flap is then transferred to a welding machine in which the side flaps are bonded to the upper body flap by welding followed by removal of the insert out of the open end of the case in still another machine. Namely, the conventional production line for the manufacture of such jacket-like cases is composed of a series of several independent machines each working for the respective step of the process.

The process using such a series of several machines is of course very complicated and with low productivity due to the times taken for the machine-to-machine transfer of the sheet materials under processing as well as for the exact positioning of the sheet material on each of the machines. When failure takes place in the exact positioning of the sheet material in any one of the machines, the resultant product is of course unacceptable due to the inaccuracy in the dimensions or due to the incomplete welding directly resulting in the decrease of the yield of acceptable products. In addition, the machine-to-machine transfer of the sheet material under processing is usually performed with the insert inside the two-fold body flaps as such so that the machine for the transfer is unavoidably a large one occupying a large space of the work room to cause a great industrial disadvantage.

Accordingly, it has been eagerly desired to develop a single machine in which a jacket-like case for a disc can be prepared from a punched development of a plastic sheet to the completion of bonding of the two side flaps on to the upper body flap by welding.

SUMMARY OF THE INVENTION

It is therefore a primary object of the present invention to provide an apparatus or machine in which the manufacturing process of a jacket-like case for a disc made of a plastic sheet can be completed starting with a punched development of a plastic sheet to end in the completion of welding at the two side flaps.

Thus, the apparatus of the present invention for the manufacture of a plastic-made jacket-like case for a disc material starting with a punched development of a plastic sheet in a generally rectangular form of which a first half portion on a side of a dividing center folding line is provided with an end flap and two side flaps along the respective peripheries comprises the elements of:

(a) a sheet-stationing table for the development sheet on which the first half portion of the development sheet provided with the flaps is mounted;

(b) a positioning means for exactly positioning the development sheet mounted on the sheet-stationing table;

(c) a body-flap lifter table adjacently positioned to a first side of the sheet-stationing table which serves to mount the second half portion of the development sheet without the peripheral flaps and to fold the second half portion of the development sheet on to the first half portion thereof in two by lifting the second half portion upwardly;

(d) a pair of side-flap lifter tables each adjacently positioned to a side of the sheet-stationing table which is adjacent to the first side of the sheet-stationing table, which serve to mount the respective side flaps of the development sheet and to bend the side flaps on to the second half portion of the development sheet folded on the first half portion of the development sheet; and

(e) a welding means above the sheet-stationing table which serves to bond the side flaps bent on the second half portion of the development sheet thereto by welding together.

BRIEF DESCRIPTION OF THE DRAWING

FIGURE 1 is a plan view of a plastic-made development sheet supplied to the inventive apparatus as the starting material.

FIGURE 2 is a perspective view of the main part of the inventive apparatus.

FIGURES 3a to 3d are each a schematic illustration of the bending step of a side flap of the development sheet in the inventive apparatus as horizontally viewed.

DETAILED DESCRIPTION OF THE PREFERRED EMBODIMENTS

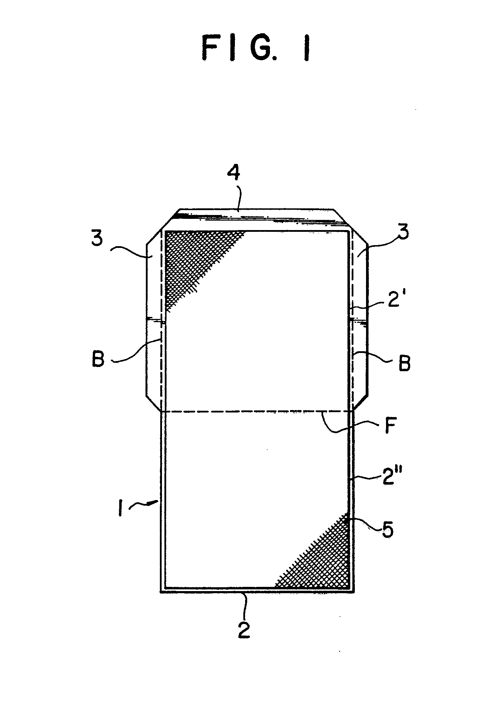

In the first place, a description is given of the plastic-made development sheet as the starting material for the manufacture of the jacket-like case of a floppy disc to be supplied to the inventive apparatus with reference to FIGURE 1 which is a plan view of the development sheet. The material of the development is a self-supporting plastic sheet made, for example, of a semi-rigid polyvinyl chloride resin filled with a carbon filler. The sheet is preferably subjected in advance to a surface treatment for reducing electrostatic charges accumulated thereon.

The developemnt 1 illustrated in FIGURE 1 is composed of a plastic sheet 2 and a lining layer 5 of, for example, a non-woven fabric made of polyester or polypropylene fibers adhesively laminated to a surface of the plastic sheet 2. The plastic sheet 2 of the development 1 is in a generally

- 6 -

0153742

rectangular form composed of a first half portion 2' and a second half portion 2" divided by a center line indicated by a broken line F which serves as the folding line in the subsequent step of folding. Each of the first and second half portions 2', 2" is in an approximately square form which is in the best compliance with the circular disc to be contained in the finished jacket-like case though not essential of course depending on the form of the disc-like material to be contained in the case which may be in a circular or in any other forms.

The first half portion 2' is provided with three peripheral flaps 3, 3 and 4 along each of the peripheries including the end flap 4 and the two side flaps 3, 3 with the broken lines B, B as the demarcation with the body of the first half portion 2' of the development sheet 2 which serve as the bending line in the subsequent step of flap bending.

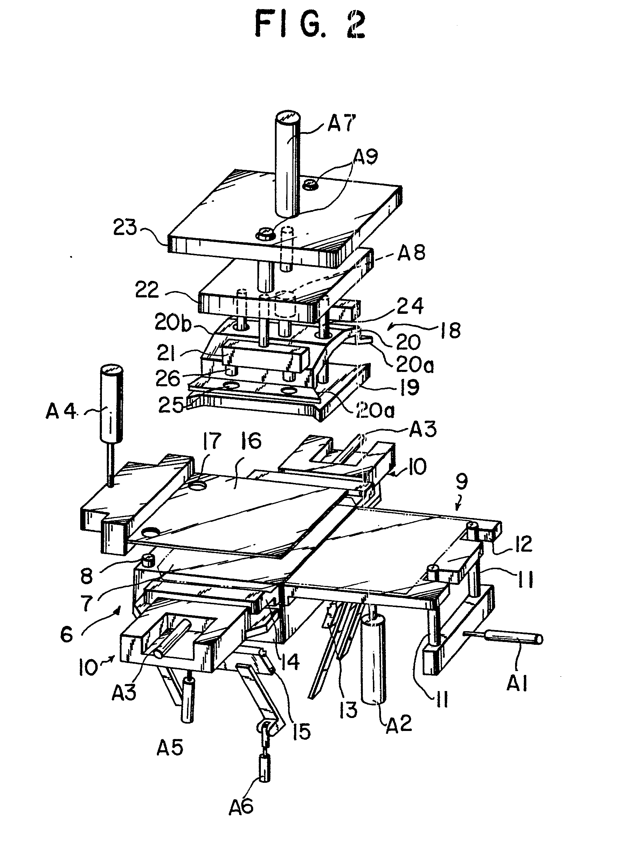

In the next place, the construction and movement of each part of the inventive apparatus are described with reference to FIGURES 2 and 3a to 3d. As is illustrated in FIGURE 2 which is a perspective view of the main part of the inventive apparatus, the development 1 with the lining layer 5 facing upwardly is mounted on the sheet-stationing table 6 in an approximately square form which is wide enough only to mount the first half portion 2' of the development sheet 2. Along the left end periphery of the table 6 on the figure are provided a plural number of stud-like stoppers 8 which serve to receive the end of the development sheet 2 provided with the end flap 4 when the development sheet 2 is mounted on the table 6. It is preferable that the sheet-stationing table 6 is provided with a suitable heating means built inside so that the surface 7 thereof can be maintained at an elevated temperature most suitable for folding and bending works.

A body-flap lifter table 9, which is also in an approximately square form, is installed adjacently to the side of the sheet-stationing table 6 opposite to the stoppers 8. The surface planes 7 and 12 of the sheet-stationing table 6 and body-flap lifter table 9, respectively, are flush with each other before mounting of the development 1 so that the development 1 can rest with stability on the tables 6, 9 when mounted thereon. A plural number of pushers 11 are provided on the right end of the body-flap lifter table 9 which thrust into the respective notches 12 to push the development sheet 1 mounted on the tables 6, 9 against the stoppers 8 by actuating the driving means $A_1$, which may be a mechanism of a pneumatic cylinder and a piston, so that exact positioning of the development 1 mounted on the tables 6. 9 is obtained in the transverse direction on the figure. When the development sheet 2 is mounted exactly on the tables 6, 9, the first and second half portions 2', 2" are each mounted on the tables 6 and 9, respectively, and the folding line F should be just above the boundary clearance between the tables 6 and 9.

Along each of the other two sides of the generally square sheet-stationing table 6 between the end stoppers 8 and the body-flap lifter table 9, a side-flap bender table 10 is provided. Since the upper surface 7 of the sheet-stationing table 6 has a width substantially the same as that of the development sheet 2 excepting the side flaps 3, 3, the side flaps 3, 3 can rest each on one of the respective side-flap bender tables 10, 10 as is shown in FIGURE 3a, in which a cross sectional view of the side-flap bender table 10 is schematically illustrated. Thus, the flap guide member 14 of the table 10 has a horizontal surface $G_1$, which is flush with the surface 7 of the sheet-stationing table 6, and a guide slope $G_2$ so that each of the side flaps 3, 3 of the first half portion 2' of the development sheet 2 can slide down as guided by the guide slope $G_2$ when the development 1 is brought by, for example, a suction holder and placed from above on to the tables so as to be exactly positioned without any correcting means. The flap guide member 14 is provided with a driving means $A_3$ to adjust the position thereof in the horizontal direction in the subsequent step for bending of the side flap 3. It is preferable that each of the side-flap bender tables 10, 10 is not in direct contact with the sheet-stationing table 6 to leave a small clearance or gap as is illustrated in FIGURE 3a, which illustrates the completion of the folding step of the body of the development sheet 2 in two, in order to minimize the possible damage on the sheet 2 in the subsequent step of bending of the side flaps 3, 3 and to make a curvature along the bending line B in he bent sheet.

When the development 1 is brought to and mounted on the tables 6, 9, 10, 10 by a suitable means (not shown in the figures) and exactly positioned as described above, a presser plate 16, which serves also as an insert in the subsequent steps of folding, bending and welding, is lowered from above along a guide rail (not shown in the figure) on to the first half portion 2' of the development sheet 2 by actuating the driving means A4 so that the development 1 is fixed at the exact position and held as such until the completion of the welding for bonding the side flaps 3, 3 to the peripheral portions of the second half portion 2" of the development sheet 2. The presser plate 16 is provided with openings 17 each with such a sufficiently large size and at such a position that descending of the presser plate 16 is not interfered by contacting with the end stoppers 8. Meanwhile, the presser plate 16 is held in a sufficiently high position before mounting of the development 1 on the tables below so as not to disturb the mounting movement of the development 1. The presser plate 16 is made of a metal and at least a part of the surface thereof is preferably treated or coated with a fluorocarbon resin or covered with a fabric

- 10 -

0153742

sheet impregnated with such a resin by adhesively bonding thereto with an object to minimize friction.

Then, the body-flap lifter table 9 is moved upwardly in a vertical direction so as to upwardly bend the flap-like second half portion 2" of the development sheet 2 along the folding line F thereof. It may be preferable that the body-flap lifter table 9 is provided with a revolving means which serves to rotate the table 9 with the side adjacent to the sheet-stationing table 6 as the axis of revolution so that the flap-like second half portion 2" can be folded on to the presser plate 16 holding the first half portion 2' below it by the continued revolution of the table 9 by actuating the driving means A₂. When improvement is desired in the folding work as described above, the body-flap lifter table 9 is also preferably provided with a heating means or a hot plate 13 in contact with the lower surface thereof at a position relatively close to the folding line F of the development sheet 2 mounted on the tables so that the plastic sheet 2 is heated and softened along the folding line F to facilitate the folding work. It is sometimes advantageous to use an auxiliary means such as an air-jet blowing (not shown in the figures) from behind the table 9 to further accelerate the folding movement of the sheet 2 with reliability. It is preferable that a small clearance or gap is kept between the sheet-stationing table 6 and the body-flap lifter table 9 so as to prevent possible damages on the development sheet 2 under folding and to make an adequate curvature along the ridge including the foldng line F when no sharp ridge line is desired.

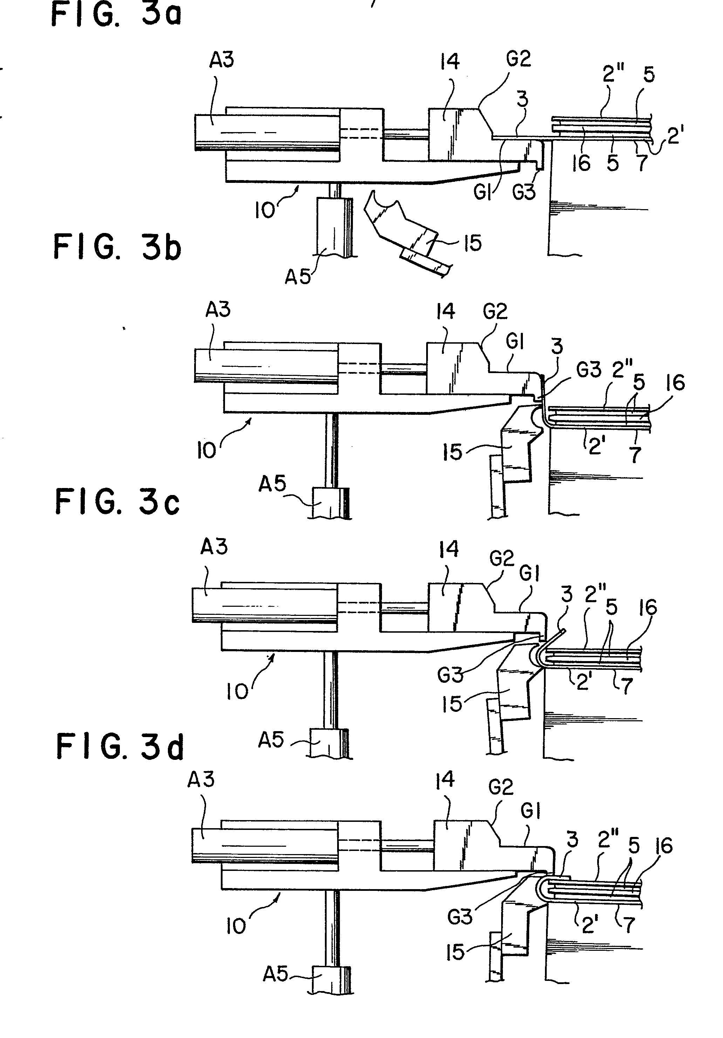

When the side-flap bender table 10 is lifted upwardly by actuating the driving means A5 as is shown in FIGURE 3b so as to raise and bend the side flap 3 upwardly along the bending line B in the development sheet 2, a hot plate 15 provided below the side-flap bender table 10 and movable in a linkage motion with the table 10 approaches and comes into contact with the bending line B by actuating the driving means A6 to heat and soften the sheet 2 along the line to facilitate plastic deformation of the sheet 2 along the bending line B. It should be noted that the contacting of the hot plate 15 with the sheet 2 takes place not along and in a single contacting line but the contacting end surface of the hot plate 15 is provided with a groove having a cross section in conformity with the curvature desired to be formed along the bending line B of the sheet 2 so that the sheet 2 is contacted with the hot plate 15 over a curved surface as is shown in FIGURE 3c. It is of course that the groove along the head of the hot plate 15 may have a square cross section when the desired peripherey of the finished case has a square form instead of the rounded form illustrated in FIGURES 3a to 3d.

The next movement in the side-flap bender table 10 which is started as the sheet 2 is heated and softened by means of the hot plate 15 is the horizontal shift of the flap guide member 14 toward the sheet-positioning table 6 or the body of the sheet 2 as is illustrated in FIGURE 3d which indicates that the flap guide member 14 has a downwardly hooked line protrusion $G_3$ at the end and this line protrusion $G_3$ comes into contact with the now raised side flap 3 as it is horizontally shifted so that the side flap 3 is pushed down to fall on to the upper half portion 2" of the folded development sheet 2. In this case, the presser plate 16 also serves as an insert. When the folding and bending works of the development sheet 2 have been completed, the flap guide member 14, body-flap folder table 9 and hot plates 13 and 15 are returned to the respective starting positions to be ready to the next-coming cycle of the folding and bending works.

The next coming step is the welding of the side flaps 3, 3 now each on the peripheral portion of the second half portion 2" of the development sheet 2 folded in two by use of the welding unit 18 held above as is illustrated in FIGURE 2 which descends when the bending step of the side flaps 3, 3 has been completed by actuating the driving means $A_7$. In the first place, a pressure plate 19 of the welding unit 18 tied to the movable supporting plate 22, which in turn is hung on the fixed supporting plate 23, by means of the connecting rods 24 is pressed down on to the assembly of

- 13 - 0153742

the folded sheet 2 and the presser plate 16 sandwiched between the lower and upper half portions 2' and 2" against the table 6 to fix the folded sheet 2 at the position. As is seen in FIGURE 2, the pressure plate 19 has a configuration sufficient to cover the whole surface of the folded sheet 2 excepting the side flaps 3, 3 now appearing on the uppermost surface of the above mentioned assembly.

Thereafter, a cooling member 20 is lowered by actuating the driving means A8 to come into contact with and cool the side flaps 3, 3 at each foot 20a in a form just to cover the whole area of the respective side flap 3 supplementarily of the pressure plate 19. The two feet 20a, 20a are connected with a barrel vault-like part 20b so that the pressure plate 19 now on the folded sheet 2 is included within the space just below this barrel vault-like part 2b when the cooling member 20 is put down on the side flaps 3, 3 at the feet 20a, 20a never to be interfered by the pressure plate 19.

In the next place, each of the welding heaters 21, 21 above the side flaps 3, 3, respectively, is lowered by actuating the driving means A9 so that the welding heads 26 provided on the lower surface of the welding heater 21 heated and kept at a temperature of, for example, 200 to 300 ºC are brought into contact with the respective side flap 3 through the openings 25 provided in each of the feet 20a, 20a of the cooling plate 20 to effect welding of the side flaps 3, 3 to the upper half portion of 2" of the sheet 2. In this case, repeated welding works in the above described manner may cause undesirable temperature increase of the cooling plate 20 so that the plastic sheet 2 may be subject to distortion by heating. Therefore, it is preferable that the cooling plate 20 is provided with a compulsory cooling means such as cooling water running therethrough.

When the welding work of the side flaps 3, 3 and the body of the jacket case has been completed, each part of the apparatus is returned to the respective starting position to be ready to the next cycle of the process and the thus finished jacket-like case is pulled and separated from the presser plate 16 by a suitable pull-out means (not shown in the figures).

WHAT IS CLAIMED IS:

1. An apparatus for the manufacture of a plastic-made jacket-like case for a disc material starting with a punched development of a plastic sheet in a generally rectangular form of which a first half portion on a side of a dividing center folding line is provided with an end flap and two side flaps along the respective peripheries which comprises the elements of:

(a) a sheet-stationing table for the development sheet on which the first half portion of the development sheet provided with the flaps is mounted;

(b) a positioning means for exactly positioning the development sheet mounted on the sheet-stationing table;

(c) a body-flap lifter table adjacently positioned to a first side of the sheet-stationing table which serves to mount the second half portion of the development sheet without the peripheral flaps and to fold the second half portion of the development sheet on to the first half portion thereof in two by lifting the second half portion upwardly;

(d) a pair of side-flap lifter tables each adjacently positioned to a side of the sheet-stationing table which is adjacent to the first side of the sheet-stationing table which serve to mount the respective side flaps of the development sheet and to bend the side flaps on to the second half portion of the development sheet folded on the first half portion of the development sheet; and

(e) a welding means above the sheet-stationing table which serves to bond the side flaps bent on the second half portion of the development sheet thereto by welding together.

0153742

# FIG. 1

0153742

# FIG. 2

0153742

FIG. 3a

FIG. 3b

FIG. 3c

FIG. 3d

# EUROPEAN SEARCH REPORT

| | DOCUMENTS CONSIDERED TO BE RELEVANT | | EP 85102181.6 |
|---|---|---|---|

| Category | Citation of document with indication, where appropriate, of relevant passages | Relevant to claim | CLASSIFICATION OF THE APPLICATION (Int Cl 4) |
|---|---|---|---|
| P,X | US - A - 4 447 218 (D.A. BERTSCH)<br>* Fig. 1-4; claims 1-26 *<br>-- | 1 | B 31 B  1/26<br>B 31 B  3/00<br>B 31 B 21/00 |
| A | DE - A1 - 3 124 418 (CHAMPION INT. CORP.)<br>* Abstract; fig. 6,7,16 *<br>---- | 1 | |

TECHNICAL FIELDS
SEARCHED (Int Cl 4)

B 31 B

The present search report has been drawn up for all claims

| Place of search | Date of completion of the search | Examiner |
|---|---|---|
| VIENNA | 15-05-1985 | SÜNDERMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82